# EUROPÄISCHE PATENTSCHRIFT

(11) **EP 3 262 739 B1**
(45) Veröffentlichungstag und Bekanntmachung des Hinweises auf die Patenterteilung: **15.04.2020**
(21) Anmeldenummer: 16700902.6
(22) Anmeldetag: 19.01.2016
(51) Int. Cl.: H02K 1/30

(54) **ROTOR FÜR EINE ELEKTRISCHE MASCHINE MIT VORTEILHAFTER DREHMOMENTÜBERTRAGUNG SOWIE ENTSPRECHENDE ELEKTRISCHE MASCHINE**
ROTOR FOR AN ELECTRIC MACHINE WITH ADVANTAGEOUS TORQUE TRANSFER AND CORRESPONDING ELECTRIC MACHINE
ROTOR POUR UNE MACHINE ÉLECTRIQUE AVEC TRANSFERT DE COUPLE AVANTAGEUX ET MACHINE ÉLECTRIQUE CORRESPONDANTE

(30) Priorität: 24.02.2015 DE 102015203257
(43) Veröffentlichungstag der Anmeldung: 03.01.2018
(73) Patentinhaber: Robert Bosch GmbH, 70442 Stuttgart (DE)
(72) Erfinder: STEINLE, Matthias, 75417 Muehlacker (DE); BRAUN, Martin, 72149 Neustetten-Wolfenhausen (DE); SCHUERG, Stefan, 71636 Ludwigsburg (DE); TURGAY, Barlas, 73760 Ostfildern (DE); LAUE, Harald, 73733 Esslingen (DE); BRAEUNIG, Anton, 70176 Stuttgart (DE)
(86) Internationale Anmeldenummer: PCT/EP2016/050950
(87) Internationale Veröffentlichungsnummer: WO 2016/134884

(56) Entgegenhaltungen:
- DE-A1- 19 610 736
- JP-A- 2009 060 738
- JP-A- 2009 130 966
- US-A1- 2013 342 038

## Beschreibung

Die Erfindung betrifft eine elektrische Maschine, etwa einen Motor oder einen Generator. Insbesondere betrifft die Erfindung eine permanent erregte Synchronmaschine.

### Stand der Technik

Elektrische Maschinen werden in einer Vielzahl von industriellen Anwendungen eingesetzt und zunehmend in der Automobilindustrie als Antrieb für Kraftfahrzeuge genutzt.

In Kraftfahrzeugen eingesetzte elektrische Maschinen sind häufig als permanent erregte Synchronmaschinen ausgestaltet und weisen einen Stator sowie einen relativ zum Stator drehbar gelagerten Rotor auf.

Die Rotoren weisen in der Regel, wie beispielsweise in der JP 2009 060738 A gezeigt, ein oder mehrere Lamellenpakete, auch Rotorpakete genannt, aus in Längserstreckungsrichtung des Rotors übereinander gestapelten Blechlamellen auf. In in Umfangsrichtung des Rotors beabstandeten Ausnehmungen des Rotors sind Permanentmagnete angeordnet, deren Magnetfelder durch Wechselwirkung mit einem von dem Stator generierten Magnetfeld zum Antrieb des Rotors genutzt werden können.

Die Lamellenpakete werden zur Drehmomentübertragung drehfest mit einem Rotorträger, etwa einer Welle und/oder Nabe, verbunden. Die drehfeste Verbindung wird meist durch Presssitz, Schrumpfsitz und/oder Formschluss hergestellt.

Aus der JP 2009 130966 A ist ein Rotor für eine elektrische Maschine bekannt, der einen Rotorträger und ein Lamellenpaket aufweist. Das Lamellenpaket hat an seinem Innenumfang Abragungen, die jeweils in eine Nut des Rotorträgers hineinragen. Die Abragungen des Lamellenpakets sind jeweils über einen vollständig mit Kunststoff befüllten Spalt von den Nuten des Rotorträgers beabstandet.

### Offenbarung der Erfindung

### Vorteile der Erfindung

Ausführungsformen der vorliegenden Erfindung können in vorteilhafter Weise ermöglichen, einen robusten, zuverlässigen und kosteneffizient herstellbaren Rotor für eine elektrische Maschine sowie eine entsprechende elektrische Maschine bereitzustellen.

Ein Aspekt der Erfindung betrifft einen Rotor für eine elektrische Maschine. Der Rotor weist einen Rotorträger, beispielsweise in Form einer Welle und/oder Nabe, und wenigstens ein Lamellenpaket mit in Längserstreckungsrichtung des Rotors übereinander gestapelten Blechlamellen, welche beispielsweise aus Elektroblech bestehen können, auf. Das Lamellenpaket ist koaxial zu dem Rotorträger angeordnet und umläuft den Rotorträger an einem Außenumfang des Rotorträgers vollständig. Das Lamellenpaket weist an einem Innenumfang wenigstens eine Abragung auf, und der Rotorträger weist an dem Außenumfang wenigstens eine Nut auf, welche kooperierend mit der Abragung des Lamellenpakets ausgebildet ist. Der erfindungsgemäße Rotor zeichnet sich insbesondere dadurch aus, dass die Abragung des Lamellenpakets und die Nut des Rotorträgers, insbesondere zur Erleichterung einer Montage des Rotors, über einen Spalt voneinander beabstandet sind, wobei der Spalt vollständig mit einem spritzgießbaren Kunststoff befüllt ist, so dass das Lamellenpaket drehfest mit dem Rotorträger verbunden ist.

Durch die Beabstandung des Rotors von dem Rotorträger über den Spalt können mechanische Spannungen in dem Lamellenpaket und/oder den Blechlamellen reduziert sein, so dass eine mechanische Stabilität, Robustheit, Drehzahlfestigkeit, Zuverlässigkeit und/oder Lebensdauer des Rotors erhöht sein kann. Auch kann durch den erfindungsgemäßen Spalt eine Montage des Lamellenpakets auf dem Rotorträger erleichtert sein.

Die Abragung kann etwa einen zahnartigen Vorsprung und/oder eine Nase bezeichnen, welche von dem Lamellenpaket in radialer Richtung des Rotors abragen und in Richtung einer Drehachse des Rotors gerichtet sein kann.

Der "spritzgießbare Kunststoff" kann hier und im Folgenden einen Kunststoff bezeichnen, der sich während der Produktion des Rotors bzw. während des Befüllens des Spaltes in einem hochfließfähigen Zustand befinden kann, so dass der Spalt vollständig über eine gesamte Länge des Lamellenpakets, etwa in einem Kunststoffspritzgussverfahren und/oder einem Transfermolding-Verfahren, befüllt werden kann. Weiter kann sich der spritzgießbare Kunststoff dadurch auszeichnen, dass er verhältnismäßig schnell aushärten kann und im ausgehärteten Zustand eine hohe mechanische Stabilität bzw. Festigkeit sowie eine hohe Temperaturbeständigkeit aufweist.

Ideen zu Ausführungsformen der vorliegenden Erfindung können unter anderem als auf den nachfolgend beschriebenen Gedanken und Erkenntnissen beruhend angesehen werden. Lamellenpakete, welche durch Presspassung bzw. Presssitz bzw. Pressverbindung auf dem Rotorträger montiert sind, können zum einen durch die Presspassung selbst und zum anderen zusätzlich durch bei Rotation des Rotors auftretende Kräfte mechanisch belastet sein. Die Pressverbindung, welche insbesondere zur Übertragung eines Drehmoments von dem Lamellenpaket auf den Rotorträger vorgesehen sein kann, kann Einfluss auf ein Spannungsbild des Lamellenpakets haben. D.h. durch die Pressverbindung können auch im Stillstand des Rotors mechanische Spannungen, etwa Zug-und/oder Biegespannungen, in dem Lamellenpaket bzw. den Blechlamellen induziert sein. Bei Rotation des Rotors können zu den durch die Presspassung induzierten Spannungen weitere mechanische Spannungen im Lamellenpaket auftreten. Je nach Anforderungen an ein Drehmoment und/oder in Abhängigkeit davon, an welcher Stelle des Lamellenpakets die jeweiligen Spannungen auftreten, können beispielsweise bei maximaler Drehzahl des Rotors und/oder bei maximalem Übermaß der Presspassung Festigkeitsgrenzen des Lamellenpakets zumindest lokal und/oder punktuell überschritten sein. Insbesondere in einem Stegbereich des Lamellenpakets, in welchem Magnetelemente angeordnet und über einen durch das Lamellenpaket ausgebildeten Steg gehalten sein können, können Festigkeitsgrenzen überschritten werden. Dies kann wiederum zu einer Reduktion einer Lebensdauer des Rotors führen. Um die Lebensdauer wieder zu erhöhen, könnte beispielsweise hochfestes Material für das Lamellenpaket verwendet werden, was wiederum mit einem aufwändigen Herstellungsprozess sowie erhöhten Produktionskosten für den Rotor einhergehen kann.

Wird das Lamellenpaket anstatt einer Presspassung durch Formschluss auf dem Rotorträger befestigt, so müssen in der Regel verhältnismäßig geringe Toleranzen für die Maße der Abragung und/oder der Nut eingehalten werden. Insbesondere kann eine Montage des Rotors aufgrund der Toleranzlagen aufwändig und teuer sein, wenn zwei Abragungen und zwei Nuten vorgesehen sind. Mehr als zwei Nuten bzw. Abragungen sind in der Praxis aufgrund der Toleranzlagen kaum möglich.

Durch die Beabstandung der Abragung des Lamellenpakets von der Nut des Rotorträgers über einen Spalt können in vorteilhafter Weise zum einen ein negativer Einfluss einer Pressverbindung auf das Spannungsbild des Lamellenpakets bzw. der Blechlamellen und zum anderen eine für einen Formschluss aufwändige Fertigung in engem Toleranzbereich vermieden werden.

Ferner kann durch die Ausgestaltung des Rotors eine durch eine Drehzahl bzw. durch Rotation des Rotors hervorgerufene Belastung, etwa eine radial wirkende Fliehkraft, von einer Belastung aufgrund der Übertragung des Drehmoments auf den Rotorträger, welche in Umfangsrichtung des Rotors wirken kann, getrennt werden. Die Drehmomentübertragung kann dabei durch das Befüllen des Spaltes mit Kunststoff und den damit hergestellten Formschluss übernommen werden, ohne mechanische Spannungen im Lamellenpaket zu induzieren. Daher kann die Belastung des Rotors bei Rotation, d.h. die Drehzahlbelastung, insbesondere im Stegbereich des Lamellenpakets, etwa aufgrund fehlender zusätzlicher mechanischer Belastung durch die Presspassung, reduziert sein. Dies kann ferner zur Folge haben, dass der Rotor mit erhöhter Drehzahl betrieben werden kann.

Gemäß einer Ausführungsform der Erfindung beträgt der Spalt zwischen der Abragung des Lamellenpakets und der Nut des Rotorträgers wenigstens 0,3 mm, beispielsweise wenigstens 0,5 mm. Der Spalt kann dabei sowohl lateral der Abragung, d.h. in Umfangsrichtung des Rotors, als auch in radialer Richtung des Rotors wenigstens 0,3 mm betragen. Eine Breite bzw. Dimension des Spalts kann etwa von einer Außenfläche der Abragung zu einer Außenfläche der Nut bemessen sein. Der Spalt muss nicht zwingend überall die gleiche Breite aufweisen, d.h. der Spalt kann in Umfangsrichtung des Rotors größer sein als in radialer Richtung des Rotors und umgekehrt. Um eine Menge des zu verwendenden Kunststoffs zu reduzieren kann es vorteilhaft sein, den Spalt im Rahmen der Fertigungstoleranzen möglichst klein zu wählen.

Gemäß einer Ausführungsform der Erfindung erstreckt sich die Abragung des Lamellenpakets über eine gesamte Länge des Lamellenpakets, und die Nut des Rotorträgers erstreckt sich über die gesamte Länge des Lamellenpakets oder des Rotorträgers. Dies kann sich vorteilhaft auf eine Übertragung des Drehmoments von dem Lamellenpaket auf den Rotorträger auswirken und insgesamt die mechanische Stabilität und/oder Belastbarkeit des Rotors erhöhen. Alternativ können sich die Abragung des Lamellenpakets und die Nut des Rotorträgers nur über einen Teil der Länge des Lamellenpakets erstrecken.

Gemäß einer Ausführungsform der Erfindung weist der Kunststoff ein Epoxidharz auf und/oder der Kunststoff ist ein Duroplast. Derartige Kunststoffe können etwa während der Fertigung erhitzt und hochfließfähig bzw. dünnflüssig sein, so dass der Spalt vollständig mit Kunststoff befüllt werden kann. Weiter können derartige Kunststoffe in ausgehärtetem Zustand eine hohe mechanische Stabilität und/oder Temperaturbeständigkeit aufweisen, was sich vorteilhaft auf eine Drehmomentübertragung und/oder eine mechanische Stabilität des Rotors auswirken kann. Auch kann der Kunststoff etwa ein thermoplastischer Kunststoff sein und/oder zur Erhöhung einer Zugfestigkeit faserverstärkt sein.

Gemäß einer Ausführungsform der Erfindung ist ein Querschnitt der Abragung und/oder ein Querschnitt der Nut rechteckig ausgestaltet. Ein rechteckiger Querschnitt kann insbesondere im Hinblick auf eine Fertigung des Lamellenpakets durch Ausstanzen und/oder im Hinblick auf ein Einbringen der Nut in den Rotorträger, etwa durch Fräsen, vorteilhaft sein. Auch können bei einem rechteckigen Querschnitt Fertigungstoleranzen besser eingehalten werden als bei anderen Querschnitten. Der Querschnitt der Abragung und/oder der Nut kann jedoch auch anders ausgestaltet sein, etwa abgerundet, dreieckig oder polygonartig.

Gemäß einer Ausführungsform der Erfindung weist der Rotor eine Mehrzahl von in Längserstreckungsrichtung des Rotors übereinander gestapelten Lamellenpaketen auf, welche jeweils wenigstens eine Abragung an dem Innenumfang aufweisen, wobei die Abragungen von jeweils direkt benachbarten Lamellenpaketen miteinander fluchten und jeweils in die wenigstens eine Nut des Rotorträgers eingreifen. Dies kann vorteilhaft eine Fertigung des Rotors vereinfachen, da die Lamellenpakete etwa zusammengefügt werden können und anschließend in ihrer Gesamtheit in einem Arbeitsschritt auf dem Rotorträger geschoben werden können.
Erfindungsgemäß weist das Lamellenpaket an dem Innenumfang eine Mehrzahl von in Umfangsrichtung des Rotors voneinander beabstandeten Abragungen auf und der Rotorträger weist an dem Außenumfang eine Mehrzahl von in Umfangsrichtung des Rotors voneinander beabstandeten Nuten auf, wobei die Abragungen jeweils über einen vollständig mit Kunststoff befüllten Spalt von den Nuten beabstandet sind. Insgesamt kann sich dies vorteilhaft auf eine Drehmomentübertragung und/oder eine mechanische Stabilität des Rotors auswirken. Jede der Verbindungen zwischen Lamellenpaket und Rotorträger, welche durch paarweise ineinander greifende Abragungen und Nuten gebildet sein können, kann dabei eine gleiche Last tragen. Eine Anzahl der Verbindungen bzw. Abragungen und/oder Nuten kann je nach Anforderungen an den Rotor und/oder je nach Kostenaufwand, etwa im Hinblick auf eine eingesetzte Menge Kunststoff, optimiert werden.
Erfindungsgemäß kann wenigstens eine der Mehrzahl von Abragungen in Umfangsrichtung des Rotors und/oder in radialer Richtung des Rotors zur Zentrierung des Lamellenpakets auf dem Rotorträger größer als die übrigen Abragungen ausgestaltet sein.
Bei der Montage des Lamellenpakets auf dem Rotorträger kann es z.B. schwerkraftsbedingt dazu kommen, dass in radialer Richtung des Rotors die Spalte auf einer Seite größer sind als auf einer genüberliegenden Seite. Im Extremfall können die Spalte bzw. zumindest ein Spalt auf der einen Seite eine doppelte Nominalbreite haben, wohingegen auf der gegenüberliegenden Seite zumindest eine Abragung vollflächig an der Nut anliegen kann, d.h. der entsprechende Spalt könnte rund 0 mm betragen. Damit alle Spalte während der Fertigung die gleiche Nominalbreite aufweisen, könnten etwa Zentrierstifte an zumindest zwei sich in radialer Richtung genüberliegenden Spalten angebracht werden, welche nach Befüllen der Spalte mit Kunststoff wieder entfernt werden können.
Wird erfindungsgemäß dagegen wenigstens eine der Abragungen größer als die übrigen ausgestaltet, so kann diese etwa als "Einstellnase" bzw. Abstandshalter dienen, so dass die die übrigen Spalte die vorgesehene Nominalbreite aufweisen können. Insgesamt kann so ein Herstellungsprozess des Rotors vereinfacht sein.

Erfindungsgemäß kann wenigstens eine der Mehrzahl von Nuten des Rotorträgers in Umfangsrichtung des Rotors und/oder in radialer Richtung des Rotors zur Zentrierung des Lamellenpakets auf dem Rotorträger kleiner als die übrigen Nuten ausgestaltet sein. Analog dem Vorsehen einer im Vergleich zu den übrigen Abragungen größeren Abragung kann das Ausbilden wenigstens einer im Vergleich zu den übrigen Nuten kleineren Nut die Herstellung des Rotors vereinfachen. Auch kann etwa wenigstens eine Abragung größer als die übrigen und wenigstens eine Nut kleiner als die übrigen Nuten ausgebildet sein. Ein weiterer Aspekt der Erfindung betrifft eine elektrische Maschine mit einem Stator und einem relativ zum Stator drehbar gelagerten Rotor, so wie obenstehend und untenstehend beschrieben

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt einen Querschnitt einer elektrischen Maschine gemäß des Standes der Technik.
Fig. 2 zeigt eine Detailansicht eines Teils eines Rotors der elektrischen Maschine aus Fig. 1.
Fig. 3 zeigt eine Detailansicht eines Teils eines Rotors gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

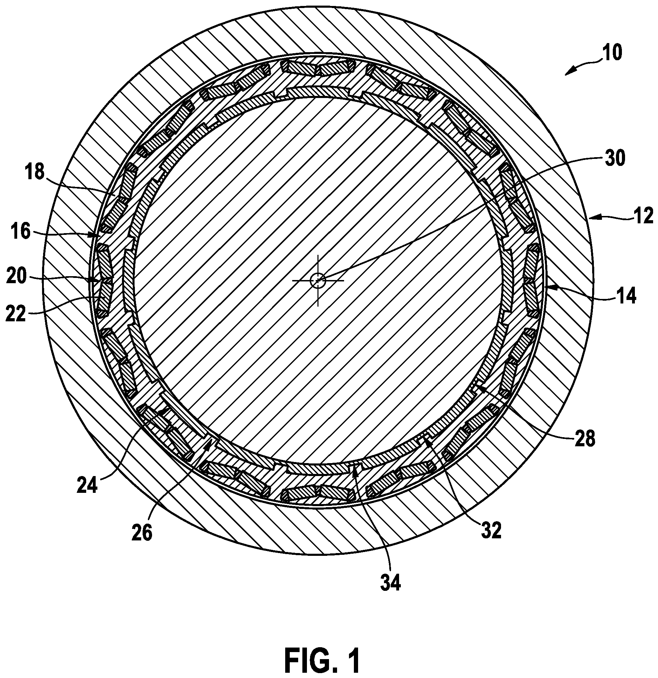

Fig. 1 zeigt einen Querschnitt einer elektrischen Maschine 10 gemäß des Standes der Technik.

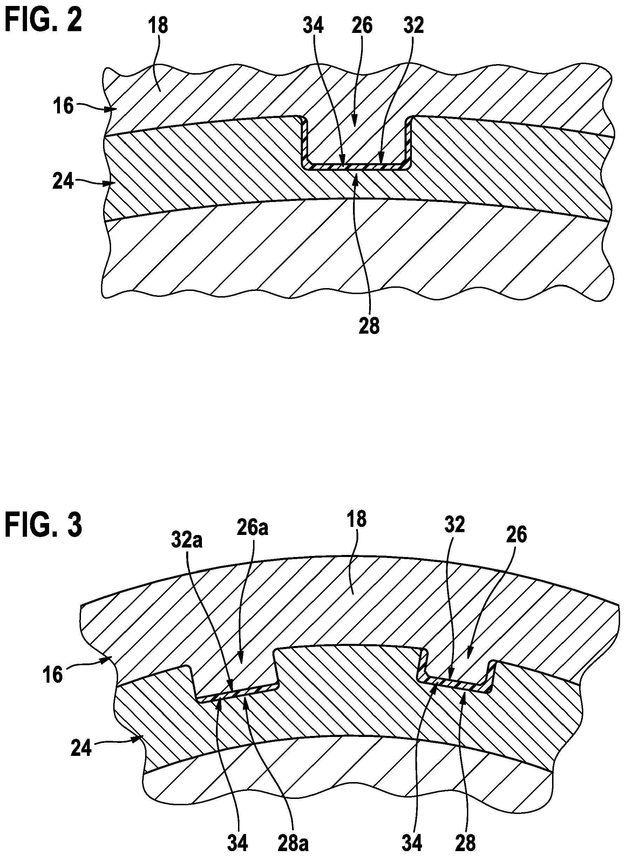

Fig. 2 zeigt eine Detailansicht eines Teils eines Rotors der elektrischen Maschine 10 aus Fig. 1.

Die elektrische Maschine 10 weist einen Stator 12 und einen relativ zum Stator 12 drehbar gelagerten Rotor 14 auf.

Der Rotor 14 weist wenigstens ein Lamellenpaket 16 aus in Längserstreckungsrichtung des Rotors 14 übereinander gestapelten Blechlamellen 18 auf. Die Längserstreckungsrichtung des Rotors kann dabei in die Zeichenebene der Fig. 1 weisen. Die Blechlamellen 18 können etwa aus Elektroblech gefertigt und/oder ausgestanzt sein. Der Rotor 14 kann auch eine Mehrzahl von in Längserstreckungsrichtung des Rotors 14 übereinander gestapelten Lamellenpaketen 16 aufweisen.

Entlang eines Außenumfangs des Rotors 14 weist der Rotor 14 eine Mehrzahl von in Umfangsrichtung des Rotors 14 voneinander beabstandeten Ausnehmungen 20 auf, in welchen jeweils wenigstens zwei V-förmig zueinander angeordnete Magnetelemente 22, etwa Seltene-Erd-Magnetelemente, angeordnet und/oder aufgenommen sind. Die Magnetelemente 22 müssen nicht zwingend V-förmig angeordnet sein, sondern können in beliebigem Winkel zueinander angeordnet sein. Auch kann nur jeweils wenigstens ein Magnetelement 22 in jeder Ausnehmung 20 aufgenommen sein, welches in beliebigem Winkel in der jeweiligen Ausnehmung 20, beispielsweise horizontal oder vertikal, angeordnet sein kann.

Weiter weist die elektrische Maschine 10 bzw. der Rotor 14 einen Rotorträger 24 auf, welcher koaxial zu dem wenigstens einen Lamellenpaket 16 angeordnet ist. Das Lamellenpaket 16 umläuft und/oder umschließt oder umgibt den Rotorträger 24 dabei ringförmig in Umfangsrichtung des Rotors 14.

An einem Innenumfang des Lamellenpakets 16 ist eine Mehrzahl von in Umfangsrichtung voneinander beabstandeten Abragungen 26 ausgebildet. Bei der in Fig. 1 gezeigten Ausführungsform sind insgesamt sechzehn Abragungen 26 ausgebildet. Es kann jedoch auch nur eine derartige Abragung 26 oder eine beliebige andere Anzahl von Abragungen 26 vorgesehen sein. Die Abragungen 26 ragen dabei bezogen auf den Rotor 14 radial nach innen in Richtung einer Drehachse 30 des Rotors 14. Die Abragungen 26 erstrecken sich dabei über eine gesamte Länge des Lamellenpakets 16 bzw. über eine gesamte Länge aller Lamellenpakete 16.

Der Rotorträger 24 weist an einem Außenumfang eine Mehrzahl von in Umfangsrichtung des Rotors 14 voneinander beabstandeten Nuten 28 auf, welche jeweils kooperierend mit den Abragungen 26 des Lamellenpakets 16 ausgestaltet sind. Analog den Abragungen 26 weist die in Fig. 1 gezeigte Ausführungsform insgesamt sechzehn Nuten 28 auf. Es kann jedoch auch nur eine derartige Nut 28 oder eine beliebige andere Anzahl von Nuten 28, etwa entsprechend der Anzahl von Abragungen 26, vorgesehen sein. Die Nuten 28 sind dabei in Form von in den Rotorträger 24 an dessen Außenumfang in Richtung der Drehachse 30 eingebrachten Vertiefungen ausgestaltet. Die Nuten 28 erstrecken sich analog den Abragungen 26 über eine gesamte Länge des Lamellenpakets 16 bzw. über eine gesamte Länge aller Lamellenpakete 16.

Die in Fig. 1 gezeigten Abragungen 26 und Nuten 28 weisen jeweils einen rechteckigen Querschnitt auf. Ein Querschnitt der Abragungen 26 kann, muss jedoch nicht zwingend, identisch bzw. geometrisch komplementär zu einem Querschnitt der Nuten 28 ausgestaltet sein. Auch andere Querschnitte für die Abragungen 26 und/oder die Nuten, wie etwa ein halbrunder, ein abgerundeter, ein dreieckiger oder ein polygonartiger Querschnitt ist denkbar.

Jede der Abragungen 26 ist über eine Spalt 32 von Wänden der zugehörigen Nut 28 beabstandet, so dass das Lamellenpaket 16 leichtgängig auf dem Rotorträger 24 anbringbar ist, ohne dass mechanische Spannungen in dem Lamellenpaket 16 induziert werden. Mit anderen Worten ist das Lamellenpaket 16 vorzugsweise nicht durch eine Presspassung mit dem Rotorträger 24 verbunden. Jede der Abragungen kann jedoch annähernd formschlüssig in der zugehörigen Nut 28 aufgenommen sein bzw. in diese eingreifen.

Die Spalte 32 zwischen den Abragungen 26 und den Nuten 28 betragen sowohl in Umfangsrichtung des Rotors 14 als auch in radialer Richtung des Rotors 14 jeweils wenigstens rund 0,3 mm, beispielsweise wenigstens rund 0,5 mm. Die Spalte 32 können dabei jeweils von einer Außenfläche der Abragungen 26 zu einer Außenfläche der zugehörigen Nut 28 bemessen sein. Ein Abstand zwischen den Abragungen 26 und der zugehörigen Nut 28, d.h. eine Spaltbreite, muss nicht zwingend in Umfangsrichtung des Rotors 14 und in radialer Richtung des Rotors 14 identisch sein, d.h. die Spaltbreite kann in Umfangsrichtung größer oder kleiner als in radialer Richtung des Rotors 14 sein.

Zur drehfesten Verbindung des wenigstens eine Lamellenpakets 16 und/oder zur Drehmomentübertragung von Lamellenpaket 16 auf den Rotorträger 24 sind die Spalte 32 jeweils vollständig mit Kunststoff 34 befüllt. Der Kunststoff 34 kann etwa in einem Spritzgießverfahren, beispielsweise einem Transfer-Molding-Verfahren, in fließfähigem und erhitztem Zustand in die Spalte 32 eingegossen werden und/oder unter Druck in die Spalte 32 eingespritzt werden. Der Kunststoff 34 kann etwa ein Epoxidharz und/oder ein duroplastisches Material und/oder ein thermoplastisches Material aufweisen. In ausgehärtetem Zustand zeichnet sich der Kunststoff 34 insbesondere durch eine hohe mechanische Stabilität und/oder eine hohe Temperaturbeständigkeit aus. Zur weiteren Erhöhung der mechanischen Stabilität und/oder einer Zugfestigkeit des Kunststoffes 34 kann dieser faserverstärkt sein.

Fig. 3 zeigt eine Detailansicht eines Teils eines Rotors 14 gemäß einer Ausführungsform der Erfindung. Sofern nicht anders beschrieben kann der in Fig. 3 gezeigte Teil des Rotors 14 dieselben Merkmale und Eigenschaften wie in vorangegangenen Figuren beschriebene Merkmale und Eigenschaften aufweisen.

Bei dem in Fig. 3 gezeigten Ausführungsbeispiel ist eine Abragung 26a in Umfangsrichtung des Rotors 14 und/oder in radialer Richtung des Rotors 14 größer als die übrigen Abragungen 26 ausgestaltet. Der Spalt 32a zwischen der Abragung 26a und der Nut 28a kann in Umfangsrichtung des Rotors 14 und/oder in radialer Richtung des Rotors 14 kleiner oder gleich 0,3 mm sein. Auch in diesem Fall muss der Spalt in Umfangsrichtung und in radialer Richtung nicht zwingend identisch bemessen sein. Die Abragung 26a kann etwa als Zentriernase erachtet werden, welche bei Fertigung des Rotors 14 bzw. beim Anbringen des Lamellenpakets auf dem Rotorträger 24 zumindest teilweise formschlüssig in der Nut 28a aufgenommen sein kann bzw. an diese anschlagen kann, so dass zwischen den übrigen Abragungen 26 und den übrigen Nuten 28 jeweils ein Spalt 32 mit einer Nominalbreite von wenigstens rund 0,3 mm ausgebildet sein kann, welcher zuverlässig mit Kunststoff 34 befüllt werden kann. Auch eine Unwucht des Rotors 14 kann dadurch verringert sein. Auch der Spalt 32a zwischen der Abragung 26a und der Nut 28a kann vollständig mit Kunststoff 34 befüllt sein.

Alternativ oder zusätzlich zu der größer ausgestalteten Abragung 26a kann die Nut 28a kleiner als die übrigen Nuten 28 ausgestaltet sein, so dass die zugehörige Abragung 26a zur Zentrierung des Lamellenpakets 16 auf dem Rotorträger 24 zumindest teilweise formschlüssig in die Nut 28a eingreifen bzw. in dieser aufgenommen sein kann.

Es kann auch eine Mehrzahl von in Umfangsrichtung des Rotors 14 voneinander beabstandeten Abragungen 26a und/oder Nuten 28a zur Zentrierung des Lamellenpakets 16 auf dem Rotorträger 24 vorgesehen sein.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Rotor (14) für eine elektrische Maschine (10), der Rotor (14) aufweisend:
einen Rotorträger (24); und wenigstens ein Lamellenpaket (16) mit in Längserstreckungsrichtung des Rotors (14) übereinander gestapelten Blechlamellen (18), wobei das Lamellenpaket (16) koaxial zu dem Rotorträger (24) angeordnet ist und den Rotorträger (24) an einem Außenumfang des Rotorträgers (24) vollständig umläuft, wobei das Lamellenpaket (16) an einem Innenumfang eine Mehrzahl von Abragungen (26) aufweist, und wobei der Rotorträger (24) an dem Außenumfang eine Mehrzahl von Nuten (28) aufweist, welche kooperierend mit den Abragungen (26) des Lamellenpakets (16) ausgebildet sind wobei die Abragungen (26) des Lamellenpakets (16) und die Nuten (28) des Rotorträgers (24) zur Erleichterung einer Montage des Rotors (14) über einen Spalt (32) voneinander beabstandet sind, wobei der Spalt (32) vollständig mit einem spritzgießbaren Kunststoff (34) befüllt ist, so dass das Lamellenpaket (16) drehfest mit dem Rotorträger (24) verbunden ist,
**dadurch gekennzeichnet, dass**
wenigstens eine Abragung (26a) der Mehrzahl von Abragungen (26) in Umfangsrichtung des Rotors (14) und/oder in radialer Richtung des Rotors (14) zur Zentrierung des Lamellenpakets (16) auf dem Rotorträger (24) größer als die übrigen Abragungen (26) ausgestaltet ist,
und/oder dass
wenigstens eine Nut (28a) der Mehrzahl von Nuten (28) des Rotorträgers (24) in Umfangsrichtung des Rotors (14) und/oder in radialer Richtung des Rotors (14) zur Zentrierung des Lamellenpakets auf dem Rotorträger (24) kleiner als die übrigen Nuten (28) ausgestaltet ist.

2. Rotor (14) gemäß Anspruch 1,
wobei der Spalt (32) zwischen den Abragungen (26) des Lamellenpakets (16) und den Nuten (28) des Rotorträgers (24) wenigstens 0,3 mm beträgt.

3. Rotor (14) gemäß einem der Ansprüche 1 oder 2,
wobei sich die Abragungen (26) des Lamellenpakets (16) über eine gesamte Länge des Lamellenpakets (16) erstrecken; und wobei sich die Nuten (28) des Rotorträgers (24) über die gesamte Länge des Lamellenpakets (16) erstrecken.

4. Rotor (14) gemäß einem der voranstehenden Ansprüche,
wobei der Kunststoff (34) ein Epoxidharz aufweist; und/oder wobei der Kunststoff (34) ein Duroplast ist.

5. Rotor (14) gemäß einem der voranstehenden Ansprüche,
wobei ein Querschnitt der Abragungen (26) und/oder ein Querschnitt der Nuten (28) rechteckig ausgestaltet sind.

6. Rotor (14) gemäß einem der voranstehenden Ansprüche,
wobei der Rotor (14) eine Mehrzahl von in Längserstreckungsrichtung des Rotors (14) übereinander gestapelten Lamellenpaketen (16) aufweist, welche jeweils eine Mehrzahl von Abragungen (26) an dem Innenumfang aufweisen,
wobei die Abragungen (26) von jeweils direkt benachbarten Lamellenpaketen (16) miteinander fluchten und jeweils in die Mehrzahl von Nuten (28) des Rotorträgers (24) eingreifen.

7. Elektrische Maschine (10), aufweisend:
einen Stator (12); und
einen Rotor (14) gemäß einem der voranstehenden Ansprüche.

## Claims

1. Rotor (14) for an electric machine (10), the rotor (14) having:
a rotor carrier (24); and at least one lamination stack (16) with sheet-metal laminations (18) stacked one on top of another in the direction of longitudinal extension of the rotor (14), wherein the lamination stack (16) is arranged coaxially with the rotor carrier (24) and fully encircles the rotor carrier (24) at an outer circumference of the rotor carrier (24), wherein the lamination stack (16) has, on an inner circumference, a plurality of projections (26), and wherein the rotor carrier (24) has, on the outer circumference, a plurality of slots (28), which are configured to cooperate with the projections (26) of the lamination stack (16), wherein the projections (26) of the lamination stack (16) and the slots (28) of the rotor carrier (24) are spaced apart from one another via a gap (32) to make it easier to fit the rotor (14), wherein the gap (32) is filled entirely with an injection-mouldable plastic (34) such that the lamination stack (16) is connected to the rotor carrier (24) for conjoint rotation,
**characterized in that**
at least one projection (26a) of the plurality of projections (26) is configured in a larger manner than the other projections (26) in the circumferential direction of the rotor (14) and/or in a radial direction of the rotor (14) in order to centre the lamination stack (16) on the rotor carrier (24),
and/or **in that**
at least one slot (28a) of the plurality of slots (28) of the rotor carrier (24) is configured in a smaller manner than the other slots (28) in the circumferential direction of the rotor (14) and/or in a radial direction of the rotor (14) in order to centre the lamination stack on the rotor carrier (24) .

2. Rotor (14) according to Claim 1,
wherein the gap (32) between the projections (26) of the lamination stack (16) and the slots (28) of the rotor carrier (24) measures at least 0.3 mm.

3. Rotor (14) according to either of Claims 1 and 2, wherein the projections (26) of the lamination stack (16) extend along an entire length of the lamination stack (16); and
wherein the slots (28) of the rotor carrier (24) extend along the entire length of the lamination stack (16).

4. Rotor (14) according to one of the preceding claims, wherein the plastic (34) exhibits an epoxy resin; and/or
wherein the plastic (34) is a thermosetting plastic.

5. Rotor (14) according to one of the preceding claims, wherein a cross section of the projections (26) and/or a cross section of the slots (28) is/are configured in a rectangular manner.

6. Rotor (14) according to one of the preceding claims, wherein the rotor (14) has a plurality of lamination stacks (16) that are stacked one on top of another in the direction of longitudinal extent of the rotor (14),
said lamination stacks (16) each having a plurality of projections (26) on the inner circumference, wherein the projections (26) of respectively directly adjacent lamination stacks (16) are aligned with one another and each engage in the plurality of slots (28) of the rotor carrier (24).

7. Electric machine (10) having:
a stator (12); and
a rotor (14) according to one of the preceding claims.

## Revendications

1. Rotor (14) pour une machine électrique (10), le rotor (14) présentant :
un support de rotor (24) ; et au moins un paquet de disques (16) avec des disques en tôle (18) empilés les uns sur les autres dans la direction d'étendue longitudinale du rotor (14), le paquet de disques (16) étant disposé coaxialement au support de rotor (24) et entourant complètement le support de rotor (24) au niveau d'une périphérie extérieure du support de rotor (24), le paquet de disques (16) présentant, au niveau d'une périphérie intérieure, une pluralité de parties saillantes (26), et le support de rotor (24) présentant, au niveau de la périphérie extérieure, une pluralité de rainures (28) qui sont réalisées de manière à coopérer avec les parties saillantes (26) du paquet de disques (16), les parties saillantes (26) du paquet de disques (16) et les rainures (28) du support de rotor (24) étant espacées les unes des autres par une fente (32) pour faciliter un montage du rotor (14), la fente (32) étant complètement remplie avec un plastique (34) pouvant être moulé par injection de telle sorte que le paquet de disques (16) soit connecté de manière solidaire en rotation au support de rotor (24),
**caractérisé en ce**
**qu'**au moins une partie saillante (26a) de la pluralité de parties saillantes (26) est réalisée de manière à être plus grande que les autres parties saillantes (26) dans la direction périphérique du rotor (14) et/ou dans la direction radiale du rotor (14) pour le centrage du paquet de disques (16) sur le support de rotor (24),
et/ou en ce
**qu'**au moins une rainure (28a) de la pluralité de rainures (28) du support de rotor (24) est réalisée de manière à être plus petite que les autres rainures (28) dans la direction périphérique du rotor (14) et/ou dans la direction radiale du rotor (14) pour le centrage du paquet de disques sur le support de rotor (24).

2. Rotor (14) selon la revendication 1, dans lequel la fente (32) entre les parties saillantes (26) du paquet de disques (16) et les rainures (28) du support de rotor (24) mesure au moins 0,3 mm.

3. Rotor (14) selon l'une quelconque des revendications 1 et 2, dans lequel
les parties saillantes (26) du paquet de disques (16) s'étendent sur toute la longueur du paquet de disques (16) ; et
les rainures (28) du support de rotor (24) s'étendent sur toute la longueur du paquet de disques (16).

4. Rotor (14) selon l'une quelconque des revendications précédentes,
dans lequel le plastique (34) présente une résine époxy ; et/ou le plastique (34) est un plastique thermodurcissable.

5. Rotor (14) selon l'une quelconque des revendications précédentes, dans lequel une section transversale des parties saillantes (26) et/ou une section transversale des rainures (28) est configurée de manière rectangulaire.

6. Rotor (14) selon l'une quelconque des revendications précédentes, le rotor (14) présentant une pluralité de paquets de disques (16) empilés les uns sur les autres dans la direction d'étendue longitudinale du rotor (14), qui présentent à chaque fois une pluralité de parties saillantes (26) au niveau de la périphérie intérieure,
les parties saillantes (26) de paquets de disques (16) à chaque fois directement adjacents étant en affleurement les unes avec les autres et s'engageant à chaque fois dans la pluralité de rainures (28) du support de rotor (24).

7. Machine électrique (10), présentant :
un stator (12) ; et
un rotor (14) selon l'une quelconque des revendications précédentes.
